Europäisches Patentamt

European Patent Office

Office européen des brevets

(11) Publication number: **0 299 518**
A2

# EUROPEAN PATENT APPLICATION

(21) Application number: 88111420.1

(22) Date of filing: 15.07.88

(51) Int. Cl.⁴ **B32B 3/28** , **B60R 13/02**

(30) Priority: 16.07.87 JP 178082/87

(43) Date of publication of application:
18.01.89 Bulletin 89/03

(84) Designated Contracting States:
DE FR GB IT

(71) Applicant: HONSHU PAPER CO., LTD.
12-8, Ginza 5-chome
Chuo-ku Tokyo(JP)

Applicant: NISSAN MOTOR CO., LTD.
No.2, Takara-cho, Kanagawa-ku
Yokohama-shi Kanagawa-ken 221(JP)

(72) Inventor: Naito, Norinao
3-12, Nakano 2-chome
Nakano-ku Tokyo(JP)
Inventor: Sekino, Shuichi
1766-1, Hirasawa
Hadano-shi Kanagawa-ken(JP)

(74) Representative: Patentanwälte Grünecker,
Kinkeldey, Stockmair & Partner
Maximilianstrasse 58
D-8000 München 22(DE)

(54) Corrugated board and liner material utilizing the same.

(57) A corrugated board takes double layer structure in corrugated medium for duplicate the strength. Each corrugated medium component is preliminarily bonded on linerboard at one side and mate with the other corrugated medium. A thermoplastic film or layer is interposed between opposing corrugated medium for bonding the corrugated mediums during thermal press process. In utilizing the corrugated board of the present invention, it is possible to form a liner material which is at least partially reinforced. Partial reinforcement may be advantagously introduced for achieving both of light weight and satisfactory strength.

# FIG.1

# CORRUGATED BOARD AND LINER MATERIAL UTILIZING THE SAME

## BACKGROUND OF THE INVENTION

### Field of the Invention

The present invention relates generally to a corrugated board and manufacturing method therefor. More specifically, the invention relates to a shaped board reinforced by a dual corrugated layer construction and a liner material utilizing the same.

### Description of the Background Art

Corrugated board become popular material as liner material because of its nature of good heat and sound insulation ability. For example, the corrugated board is used as roof trim, door trim and so forth in an automotive vehicle body construction. Such corrugated board and manufacturing method thereof has been disclosed in the United States Patent **4,093,482,** issued on June 6, 1978 to Ogata et al. Though the corrugated board disclosed in the Ogata et al is advantageous to utilize as vehicular roof trim, door trim and so forth for light weight and cheaper cost.

However, in certain application, the corrugated board of Ogata et al lacks stiffness or strength. For instance, when such board is to be used for roof trim of a vehicle which is facilitated a sunroof, the strength of the board is not sufficient for the portion where concentrated stress is exerted.

## SUMMARY OF THE INVENTION

Therefore, it is an object of the present invention to provide a corrugated board having an increased strength.

Another object of the invention is to provide a method for effectively manufacturing the corrugated board of desired configuration.

A further object of the invention is to provide a liner material with increased strength suitable for automotive application.

In order to accomplish aforementioned and other objects, a corrugated board, according to the present invention, takes double layer structure in corrugated medium for duplicate the strength.

In the preferred process of manufacturing, each corrugated medium component is preliminarily bonded on linerboard at one side and mate with the other corrugated medium. A thermoplastic film or layer is interposed between opposing corrugated medium for bonding the corrugated mediums during thermal press process.

In utilizing the corrugated paperboard of the present invention, it is possible to form a liner material which is at least partially reinforced. Partial reinforcement may be advantagously introduced for achieving both of light weight and satisfactory strength.

According to one aspect of the invention, a corrugated paperboard comprises first and second linerboard made of sheet material and arranged in essentially parallel relationship to each other and in spaced apart relationship in a desired distance, and first and second corrugated mediums made of sheet material and having a plurality of parallel corrugations, each having essentially identical corrugation constructions with essentially identical corrugation profiles, the first and second corrugated mediums being engaged to each other and at least partially bonded to each other by a thermoplastic resin, and the first corrugated medium being bonded to the first linerboard at essentially peak portion of the corrugations and the second corrugated medium being bonded to the second linerboard at essentially peak portion of the corrugations.

According to another aspect of the invention, a corrugated paperboard shaped in a desired configuration having at least a portion three-dimensionally curved, comprises first and second linerboard made of sheet material and arranged in essentially parallel relationship to each other and in spaced apart relationship in a desired distance, and first and second corrugated mediums made of sheet material and having a plurality of parallel corrugations, each having essentially identical corrugation constructions with essentially identical corrugation profiles, the first and second corrugated mediums being engaged to each other and bonded to each other by a thermoplastic resin at first bonding points, and the first corrugated medium being bonded to the first linerboard at essentially peak portion of the corrugations at second bonding points and the second corrugated medium being bonded to the second linerboard at essentially peak portion of the corrugations third bonding points, the first, second and third bonding points being variable at orientations for maintaining shaped configuration.

According to a further aspect of the invention, a corrugated paperboard comprises a first section which comprises first and second linerboard made of sheet material and arranged in essentially parallel relationship to each other and in spaced apart relationship in a desired distance, and a single corrugated medium made of sheet material and having a plurality of parallel corrugations, and the single corrugated medium being bonded to the first and second linerboards essentially at peak portions of the corrugations, and a second section comprising first and second linerboard common to the first section and being spaced apart at essentially the same distance to that of the first section, and first and second corrugated mediums made of sheet material and having a plurality of parallel corrugations, each having essentially identical corrugation constructions with essentially identical corrugation profiles, the first and second corrugated mediums being engaged to each other and at least partially bonded to each other by a thermoplastic resin, and the first corrugated medium being bonded to the . first linerboard at essentially peak portion of the corrugations and the second corrugated medium being bonded to the second linerboard at essentially peak portion of the corrugations.

According to a still further aspect of the invention, a corrugated paperboard shaped in a desired configuration having at least a portion three-dimensionally curved, comprises a first section which comprises first and second linerboard made of sheet material and arranged in essentially parallel relationship to each other and in spaced apart relationship in a desired distance; and a single corrugated medium made of sheet material and having a plurality of parallel corrugations, and the single corrugated medium being bonded to the first and second linerboards essentially at first bonding points which are essentially oriented at peak portions of the corrugations; and
a second section comprising first and second linerboard common to the first section and being spaced apart at essentially the same distance to that of the first section, and first and second corrugated mediums made of sheet material and having a plurality of parallel corrugations, each having essentially identical corrugation constructions with essentially identical corrugation profiles, the first and second corrugated mediums being engaged to each other and at least partially bonded to each other by a thermoplastic resin at second bonding points, and the first corrugated medium being bonded to the first linerboard at third bonding portion oriented essentially at peak portions of the corrugations and the second corrugated medium being bonded to the second linerboard at fourth bonding points oriented essentially at peak portions of the corrugations,
the first, second, third and fourth bonding points being variable at orientations for maintaining shaped configuration.

According to a still further aspect of the invention, a corrugated paperboard shaped in a desired configuration comprises a first section which comprises first and second linerboard made of sheet material and arranged in essentially parallel relationship to each other and in spaced apart relationship in a desired distance, and a single corrugated medium made of sheet material and having a plurality of parallel corrugations, and the single corrugated medium being bonded to the first and second linerboards essentially at first bonding points which are essentially oriented at peak portions of the corrugations, and
a second section comprising first and second linerboard common to the first section and being spaced apart at essentially the same distance to that of the first section, and first and second corrugated mediums made of sheet material and having a plurality of parallel corrugations, each having essentially identical corrugation constructions with essentially identical corrugation profiles, the first and second corrugated mediums being engaged to each other and at least partially bonded to each other by a thermoplastic resin bonding medium at second bonding points, and the first corrugated medium being bonded to a third linerboard at third bonding portion oriented essentially at peak portions of the corrugations, which third linerboard having a surface opposing the first linerboad and bonded thereto, and the second corrugated medium being bonded to the second linerboard at fourth bonding points oriented essentially at peak portions of the corrugations,
the first, second, third and fourth bonding points being variable at orientations for maintaining shaped configuration.

According to a yet further aspect of the invention, a method of manufacturing corrugated paperboard, comprising the steps of:
preparing pre-assembly of a sheet material linerboard and a sheet material corrugated medium in a form of single-wall corrugated paperboard;
arranging a pair of pre-assemblies in opposing corrugated mediums;
disposing a bonding medium therebetween, the bonding medium being made of a material which is in solid state under a normal temperature and molten at a predetermined temperature for bonding;
exerting pressure onto at least one of the pre-assembly in a direction toward the other pre-assembly under a temperature higher than or equal to the predetermined temperature for assembling the pair of pre-assemblies into a paperboard by bonding the mating corrugated mediums; and
curing pressed paperboard for solidification of the bonding medium.

According to a still further aspect of the invention, a method of manufacturing corrugated paperboard, comprises the steps of:

preparing first pre-assembly of a sheet material linerboard and a sheet material corrugated medium in a form of single-wall corrugated paperboard;

arranging a pair of firstr pre-assemblies in opposing corrugated mediums;

disposing a bonding medium therebetween, the bonding medium being made of a material which is in solid state under a normal temperature and molten at a predetermined temperature for bonding;

attaching the bonding medium to one of the first pre-assembly to form a second preassembly;

combining the first assembly and mating second assembly in a pre-combined form;

exerting pressure onto the pre-combined form of the first and second pre-assemblies through at least one of the pre-assemblies in a direction toward the other pre-assembly under a temperature higher than or equal to the predetermined temperature for assembling the pair of pre-assemblies into a paperboard by bonding the mating corrugated mediums; and

curing pressed paperboard for solidification of the bonding medium.

According to a further aspect of the invention, a method of manufacturing corrugated paperboard, comprising the steps of:

preparing first pre-assembly of a sheet material linerboard and a sheet material corrugated medium in a form of single-wall corrugated paperboard;

arranging a pair of first pre-assemblies in opposing corrugated mediums:

disposing a bonding medium therebetween, the bonding medium being made of a material which is in solid state under a normal temperature and molten at a predetermined temperature for bonding;

forming second pre-assembly by performing light hot press;

feeding the second pre-assembly to a hot press station;

exerting pressure onto the second pre-assembly at the hot press station through at least one side thereof in a direction toward the other side under a temperature higher than or equal to the predetermined temperature for assembling the pair of pre-assemblies into a paperboard by bonding the mating corrugated mediums; and

curing pressed paperboard for solidification of the bonding medium.

Preferably, the bonding medium is a thermoplastic resin which is selected among polyethylene, polypropylene, polyvinyl chloride, polyvinyl acetate, polystyrene, ethylene-propylene, copolymers and ethylenevinyl acetate copolymers. Further preferably, the bonding medium further contains a filler of talc.

For convenience of manufacturing operation, the thermoplastic resin is provided in a form of thin film.

The pressure exerting step is performed by means of a hot press apparatus having a heated dies. The pressure exerting step includes a step of adjusting heat of the dies in such a manner than heat is transferred from one of the dies to the other of die via the pre-assemblies disposed therebetween. The stroke of the dies is adjusted as to obtain desired thickness of paperboard through the pressing process.

According to a yet further aspect of the invention, a vehicular liner material made from a corrugated paperboard, comprises a decorative liner; and

a shaped sheet material board which comprises first and second linerboard made of sheet material and arranged in essentially parallel relationship to each other and in spaced apart relationship in a desired distance, on the first linerboard the decorative liner is fixedly attached, and first and second corrugated mediums made of sheet material and having a plurality of parallel corrugations, each having essentially identical corrugation constructions with essentially identical corrugation profiles, the first and second corrugated mediums being engaged to each other and at least partially bonded to each other by a thermoplastic resin, and the first corrugated medium being bonded to the first linerboard at essentially peak portion of the corrugations and the second corrugated medium being bonded to the second linerboard at essentially peak portion of the corrugations.

According to a still further aspect of the invention, a vehicular liner material made from a corrugated paperboard, comprises a decorative liner, a shaped paperboard in a desired configuration including at least a three-dimensionally curved portion, which shaped paperboard comprises first and second linerboard made of sheet material and arranged in essentially parallel relationship to each other and in spaced apart relationship in a desired distance, and first and second corrugated mediums made of sheet material and having a plurality of parallel corrugations, each having essentially identical corrugation constructions with essentially identical corrugation profiles, the first and second corrugated mediums being engaged to each other and bonded to each other by a thermoplastic resin at first bonding points, and the first corrugated medium being bonded to the first linerboard at essentially peak portion of the corrugations at second bonding points and the second corrugated medium being bonded to the second linerboard at essentially peak portion of the corrugations third bonding points, the first, second and third bonding points being variable at orientations for maintaining shaped configuration.

According to a still further aspect of the invention, a vehicular liner material made from a corrugated paperboard, comprises a decorative liner, a shaped paperboard in a desired configuration including at least a three-dimensionally curved portion, which shaped paperboard comprises a first section which comprises first and second linerboard made of sheet material and arranged in essentially parallel relationship to each other and in spaced apart relationship in a desired distance, and a single corrugated medium made of sheet material and having a plurality of parallel corrugations, and the single corrugated medium being bonded to the first and second linerboards essentially at first bonding points which are essentially oriented at peak portions of the corrugations, and a second section comprising first and second linerboard common to the first section and being spaced apart at essentially the same distance to that of the first section, and first and second corrugated mediums made of sheet material and having a plurality of parallel corrugations, each having essentially identical corrugation constructions with essentially identical corrugation profiles, the first and second corrugated mediums being engaged to each other and at least partially bonded to each other by a thermoplastic resin at second bonding points, and the first corrugated medium being bonded to the first linerboard at third bonding portion oriented essentially at peak portions of the corrugations and the second corrugated medium being bonded to the second linerboard at fourth bonding points oriented essentially at peak portions of the corrugations, the first, second, third and fourth bonding points being variable at orientations for maintaining shaped configuration.

The vehicular liner material may be applied for a vehicular roof trim for a vehicle roof construction having a sunroof opening, and the second section of the paperboard is oriented around a opening formed in the paperboard at a position corresponding to the sun roof opening. In the alternative, the vehicular liner material may be applied for a vehicular roof trim for a vehicle roof construction having a T-bar roof opening, and the second section of the paperboard is oriented around a opening formed in the paperboard at a position corresponding to the T-bar roof opening.

According to a yet further aspect of the invention, a vehicular liner material made from a corrugated paperboard, comprises a decorative liner; a shaped paperboard in a desired configuration which shaped paperboard comprises a first section, which comprises first and second linerboard made of sheet material and arranged in essentially parallel relationship to each other and in spaced apart relationship in a desired distance, and a single corrugated medium made of sheet material and having a plurality of parallel corrugations, and the single corrugated medium being bonded to the first and second linerboards essentially at first bonding points which are essentially oriented at peak portions of the corrugations, and a second section comprising first and second linerboard common to the first section and being spaced apart at essentially the same distance to that of the first section, and first and second corrugated mediums made of sheet material and having a plurality of parallel corrugations, each having essentially identical corrugation constructions with essentially identical corrugation profiles, the first and second corrugated mediums being engaged to each other and at least partially bonded to each other by a thermoplastic resin bonding medium at second bonding points, and the first corrugated medium being bonded to a third linerboard at third bonding portion oriented essentially at peak portions of the corrugations, which third linerboard having a surface opposing the first linerboad and bonded thereto, and the second corrugated medium being bonded to the second linerboard at fourth bonding points oriented essentially at peak portions of the corrugations, the first, second, third and fourth bonding points being variable at orientations for maintaining shaped configuration.

## BRIEF DESCRIPTION OF THE DRAWINGS

In the drawings:

Fig. 1 is a sectional view of the preferred embodiment of a corrugated paperboard according to the present invention;

Fig. 2 is a sectional view of the corrugated paperboard in exploded form;

Fig. 3 is a front elevation of hot press apparatus which can be used for manufacturing desired configuration of the corrugated paperboard, which hot press apparatus is illustrated in an initial state before hot press;

Fig. 4 is a front elevation similar to Fig. 3 but showing the state performing hot press;

Fig. 5 is a perspective illustration of the preferred embodiment of the corrugated paperboard according to the invention, which is obtained through hot press process;

Fig. 6(a) and 6(b) are perspective illustations of liner materials to be used for a roof trim of an automotive vehicle body construction

Fig. 7 is a perspective illustration of a liner material which is applicable for a vehicular roof trim, which automotive vehicle has a sunroof;

Fig. 8 is a perspective view of a liner material which can be used as a roof trim of the vehicle having T-bar roof construction;

Fig.9 is an exploded perspective view of another embodiment of a corrugated paperbord according to the invention; and

Fig. 10 is a perspective view of the corrugated paperboard of Fig. 9 but shown in the assembled form.

## DESCRIPTION OF THE PREFERRED EMBODIMENT

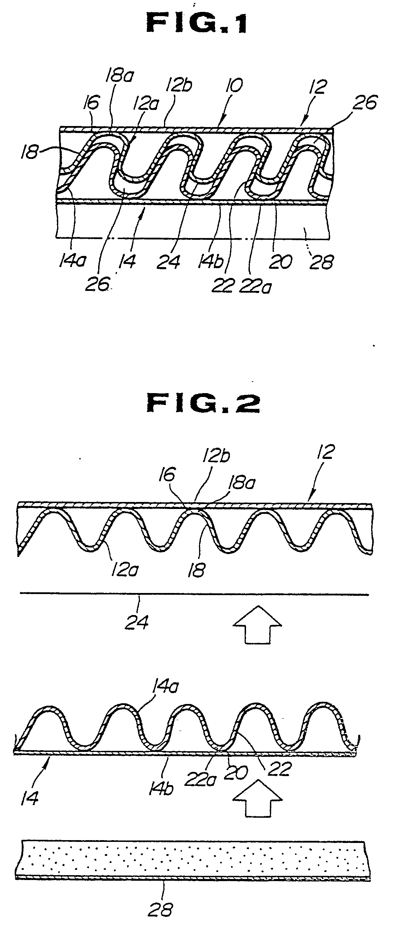

Referring now to the drawings, particularly to Fig. 1, the preferred embodiment of a corrugated paperboard 10, according to the present invention, is originally formed into mutually separated segments 12 and 14. As will be clearly seen from Fig. 2, both of the segments 12 and 14 are provisionally formed into essentially flat single-wall corrugated paperboards. Namely, the segment 12 comprises a corrugated medium 12a essentially made of paper and linerboard 12b which is also essentially made of paper. The paper linerboard 12b is bonded by means of thermoplastic resin 16 at respective opposing peaks 18a of the corrugation 18 of the corrugated medium 12a. In practice, the thermoplastic resin 20 is provided in a form of solid state thin film which melts under a heat above a melting point and thus serves as bonding medium for bonding the linerboard onto the peaks of the corrugations of the corrugated medium under a certain pressure to be exerted. Similarly, the segment 14 comprises a corrugated medium 14a essentially made of paper and linerboard 14b which is also essentially made of paper. The corrugation of the corrugated medium 14a is substantially identical to that of the corrugated medium 12a. The paper linerboard 14b is bonded by means of thermoplastic resin 20 at respective opposing peaks 22a of the corrugation 22 of the corrugated medium 14a. In practice, the thermoplastic resin 20 is provided in a form of solid state thin film which melts under a heat above a melting point and thus serves as bonding medium for bonding the linerboard onto the peaks of the corrugations of the corrugated medium under a certain pressure to be exerted.

Though the shown embodiment typically employs linerboards 12b and 14b made of paper, the material for forming the linerboards is not specified to paper but can be of any suitable material. For example, a sheet of a laminate of paper and resin film which may practically formed in a form of pair of paper sandwitching the resin file therebetween, a paper linerboard with laminate sheet of paper and resin film, non-woven fabric sheet with glass fiber, a pulp fiber, a resin pulp fiber and so forth can be used as materials for forming the linerboard. The linerboard may also be constituted by laminating a resin film, such as polyester film, a polyethylene film as a bonding medium and a paper linearboard. In case, the laminate is used as material for forming the linerboard or as surface layer of the linerboard, waterproofing effect can be obtained. On the other hand, when the fiber containing sheet, e.g. non-woven fabric sheet, is used, magnitude of expansion and contact due to humidity variation become smaller. Furthermore, the linerboard can be formed by relatively thick resin film per se. In addition, the corrugated medium can also be formed by resin sheet.

The resin material for forming the currugated medium can be any of appropriate synthetic resin materials which can be same as the material of the linerboard. Of course, it is possible to utilize the resin corrugated medium for the paperboard having paper linerboard. In either case, the resin sheet as linerboard and/or corrugated meium will exhibit waterproofing effect.

It should be noted that when the resin corrugated medium and/or resin liner board are used, the thermoplastic resin to be used for bonding between the linerboard and the corrugated medium and/or for bonding between the corrugated medium may be selected from a resin materials which has lower melting temperatures than that of the resins forming the linerboard and/or the corrugated medium.

Assembling of the linerboard onto the corrugated medium may be performed in per se well known manner. However, it may be possible to provide the segments 12 and 14 as pre-assemblies, in which each of the corrugated mediums and the corresponding linerboards is previsionally attached.

The segments 12 and 14 are placed to oppose the corrugated mediums 12a and 14a to each other, upon assembling. A thermoplastic film 24 is disposed between the opposing corrugated mediums 12a and 14a, which thermoplastic resin film is maintained in solid state under normal temperature and can be molten during hot press process in order to serve as bonding medium for bonding the mating corrugated mediums 12a and 14a.

Variety of thermoplastic resin can be used for forming the thermoplastic resin film. Amongest variety of the thermoplastic resins, polyethylene, polypropylene, polyvinyl chloride, polyvinyl acetate, polystyrene, ethylene-propylene, copolymers and ethylenevinyl acetate copolymers and so forth are preferred to be used as resin material.

It is also possible to use a hot melt as the bonding medium. Further preferably, filler, such as talc may be added to the resin material for forming the thermoplastic resin film.

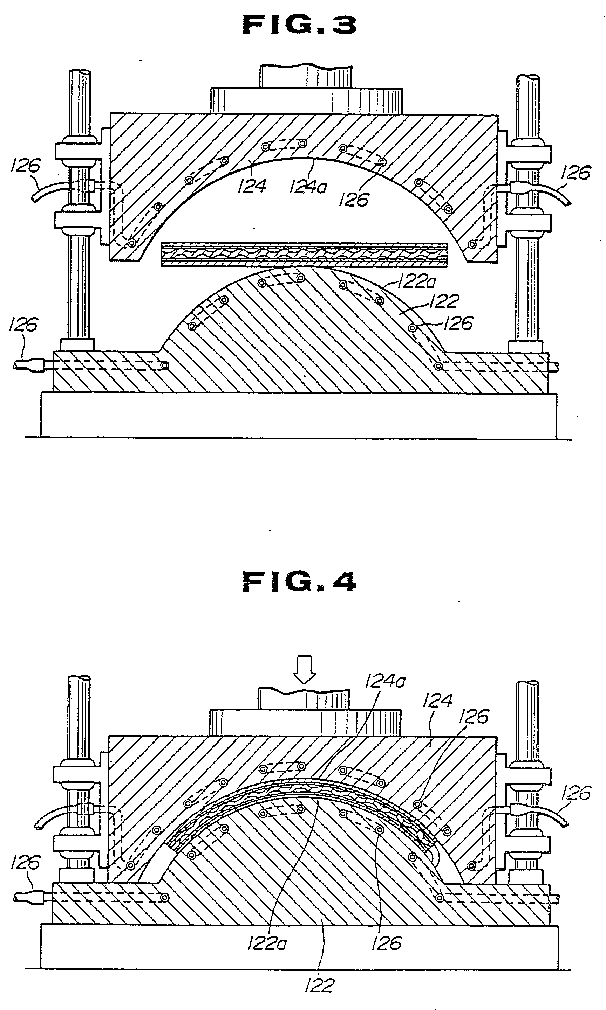

The segments 12 and 14 and the thermoplastic resin film 24 may be pre-assembled before being fed into the process of hot press. For forming pre-assembly of the segments **12** and **14**, the identical corrugations of the corrugated mediums **12a** and **14a** serve to maintain the segments and the film in pre-assembled form. The pre-assembly, thus formed, is fed to hot press apparatus **100** which is shown in **Figs. 3** and **4**.

In the practical process of the formation of pre-assembly, part of thermoplastic resin film, such as the portion extending along the edge of the board, is attached and bonded onto one of the linerboard and the corrugated medium.

The hot press apparatus **100** comprises a male die **122** and a female die **124** which has curved surfaces **122a** and **124a,** respectively. Though the shown example of dies **122** and **124** are illustrated to have plane semicircular curvatures on the surfaces **122a** and **124a**, it may be possible to formulate the configurations of the surfaces into any desired configurations including curved portion or portions. The dies **122** and **124** are provided with certain heating means **126,** such as spiral or meandering pipes for passing steam or a heated oil therethrough. In the alternative, the heating means may comprise an electric heater which may facilitate better heating temperature control characteristics than that in the heating means utilizing the hot fluid heating medium.

In the preferred embodiment, the heating means **126** is so controlled as to provide greater heat for the male die **122** than that supplied to the female die **124**. As a result, the temperature of the male die **122** becomes higher than that of the female die **124**. This temperature difference is advantageously introduced so that heat may be transferred from the male die **122** to the female **124** for better heating efficiency and assuring melting of the thermoplastic resin film **24**.

When the dies **122** and **124** are heated to a temperature about the softening or melting point of the thermoplastic resin film **24,** the pre-assembly of the segments **12** and **14** are supplied between the dies **12** and **14**. Then, the dies **12** and **14** are brought into engagement with a predetermined depression pressure to be exerted on the pre-assembly for performing hot press operation.

In the practical hot press process, the male and female dies **122** and **124** are, at first, brought into positions, at which they leaves a clearance therebetween slightly wider than the desired thickness of the finished paperboard thickness **d.** The dies **122** and **124** are maintained in place for a predetermined period which should be long enough to satisfactorily melt the thermoplastic resin film by transferring the heat from the higher temperature male **122** die to the lower temperature female die **124**. During this heating process, the thermoplastic resin layers **16** and **20** which are used for bonding the linerboard **12b** and **14b** onto the peaks of respectively associated corrugated mediums **12a** and **14a**, also melt. Melting of the thermoplastic resin layers **16** and **20** allows to make slipping movement or relative displacement between the peaks of the corrugated medium **12a** and **14a** and the associated linerboards **12b** and **14b**. This changing bonding point between the corresponding corrugated mediums **12a** and **14a** and the linerboards **12b** and **14b** for adapting the bonding points at the points suitable for maintaining the pressed desired configuration after curing.

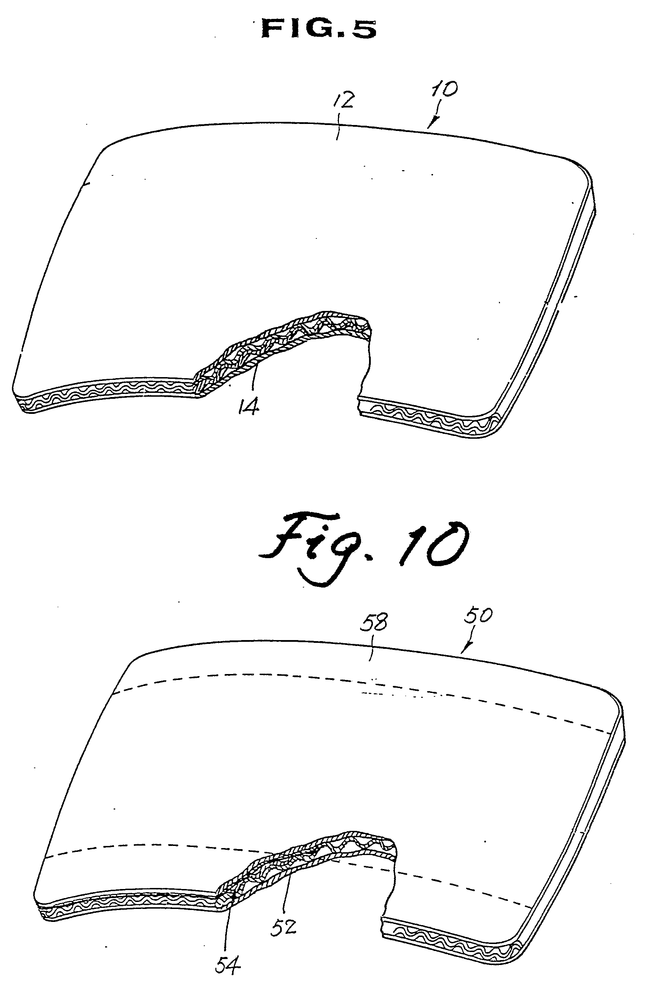

During the hot press process, the mating corrugated mediums **12a** and **14a** are comes into tight engagement sandwitching the thermoplastic resin film **24**. Since the thermoplastic resin film **24** is in molten fluidized state, it may coupled with fibers of the corrugated mediums. After curing, the thermoplastic resin **24** becomes solid state in a form coupled with the fibers of the both corrugated mediums. As a result, firm coupling between the corrugated mediums **12a** and **14a** can be established. The corrugated paperboard obtained through the aforementioned hot press process is shown in **Fig. 5.**

The aforementioned hot press process except for manner of coupling two corrugated mediums, has been disclosed in detail in the United Stated Patent **4,093,482** to Ogata et al. The disclosure of the above-identified United States Patent is herein incorporated by reference for the sake of disclosure.

As seen from **Fig. 1,** the corrugated mediums **12a** and **14a** after hot press process maintains substantially small air gaps **26** between the engaging corrugations. Though this air gaps **26** can be avoided by utilizing higher pressing pressure for establishing further tight engagement between the corrugated mediums **12a** and **14a**, the air gaps **26** may be better to be left even after hot press so as to obtain better heat and sound insulating property of the formed paperboard. Namely, the air maintained in the air gaps **26** may serves as medium for insulating or absorbing heat and insulating sound.

In case, the paperboard **10** thus constructed is used as a material for roof trim, door trim and so forth of the automotive vehicle, a decorative surface liner of cloth, lather and so forth may be bonded on the inner-side linerboard **14b**.

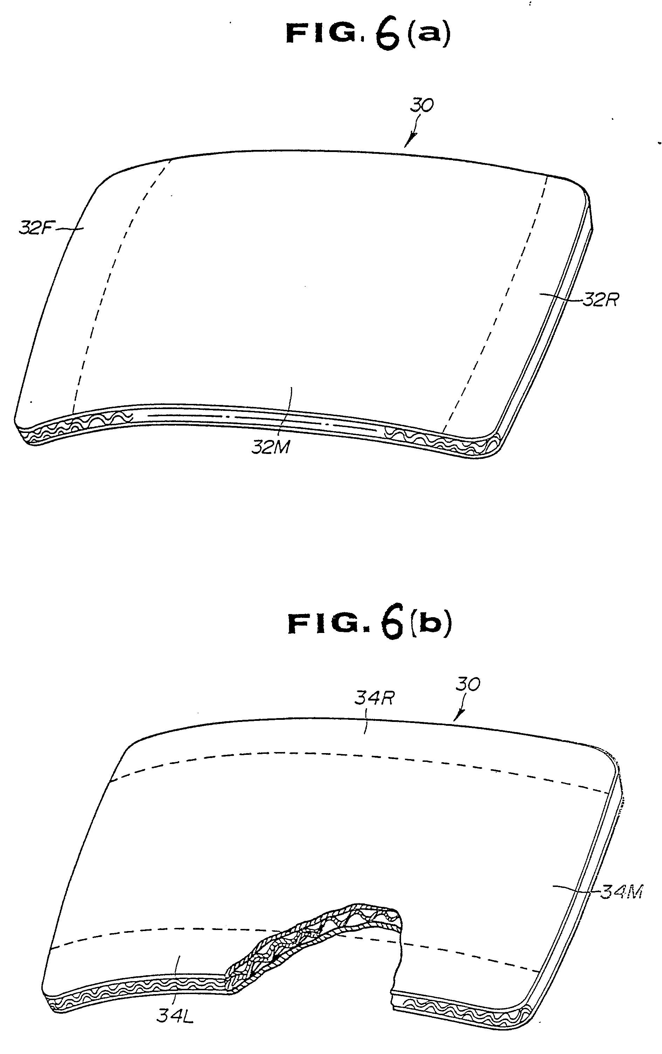

**Figs. 6a** and **6b** show examples of application of the preferred embodiment of the paperboard according to the invention. In this example, the shaped paperboard **30** is designed to be used as roof trim of an automotive vehicle. As will be seen from **Figs. 6a** and **6b**, the paperboard **30** has different cross sections at different portion thereof. Namely, the paperboard **30** of **Fig. 6a** has longitudinal edge portions **32F** and **32n**, each of which has double layer corrugate construction, and a mid portion **32M** which has single layer corrugate construction having single corrugated medium. In the alternative, the paperboard **30** of **Fig. 6b** has lateral edge portions **34L** and **34R** having double layer corrugate constructions, and a mid portion **34M** having single layer corrugate construction. As will be appreciated, the edge portion of the paperboard tends to becomes weaker than the remaining portion, double layer corrugate construction applied to this portion will satisfactorily compensate strength. Furthermore, such double corrugate construction at the edge portion of the paperboard may produce sufficient strength for resisting against being stress to be exerted thereon.

In addition, by partially applying double layer corrugate construction, increasing of the weight of the paperboard can be modified despite substantially increased strength can be obtained. Therefore, such partial application of the double layer, corrugated construction may be advantageously introduced in various constructions.

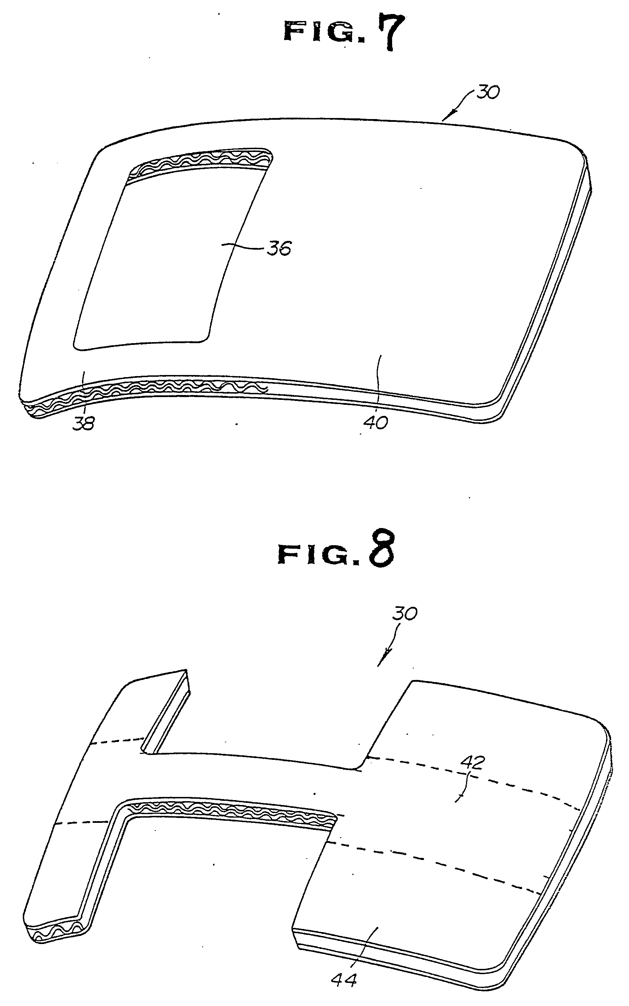

For example, **Fig. 7** shows a paper board **30** which is applicable as roof trim for an automotive vehicle having a sun roof. As will be naturally appreciated, when the automotive roof is provided with sunroof opening, bending and/or stretching stress to be exerted on the roof tends to be concentrated to the edge portion of the sunroof opening. That means that greater strength of the paperboard is required at the portion corresponding to the peripheral edge of the sunroof opening.

The shaped paperboard **30** has to have opening **36** at the position corresponding to the sunroof opening of the vehicular roof panel (not shown). As will be appreciated, the paperboard is generally weak at the edge portion. Therefore, in view of compensation of the strength for the edge portion defining the opening **32** and in order to provide capability of the paperboard to serve as reinforcement of the vehicular roof with the sunroof construction, the double layer corrugated medium structure **38** set forth above is advantageously introduced. On the other hand, in order to satisfy the requirement for the roof trim for reduction weight, double layer construction of the corrugated medium will serve as interfering factor. In order to maintain increasing of the weight of the paperboard **30** minimum, the shown embodiment takes single layer corrugated medium construction for the general section **40** of the roof. Since the stress to be exerted on the general section **40** is not significant and since the portion of the roof corresponding to the general section is usually reinforced by frame works or reinforcements, substantial strength is not required for the roof trim. Therefore, the roof trim construction may achieve both requirement for sufficient strength at the portion around the sunroof opening and for light weight.

**Fig. 8** shows another example of the preferred embodiment of the paperboard **30** of the present invention. In this example, the paperboard **30** is designed to form roof trim of an automotive roof having T-bar roof construction. Similarly to the former example, the paperboard **30** is separated into double corrugate section **42** and single corrugate section **44**. Similarly to the former example, this can achieve satisfactory strength at the edge portion of the T-structure and satisfactory light weight in overall construction.

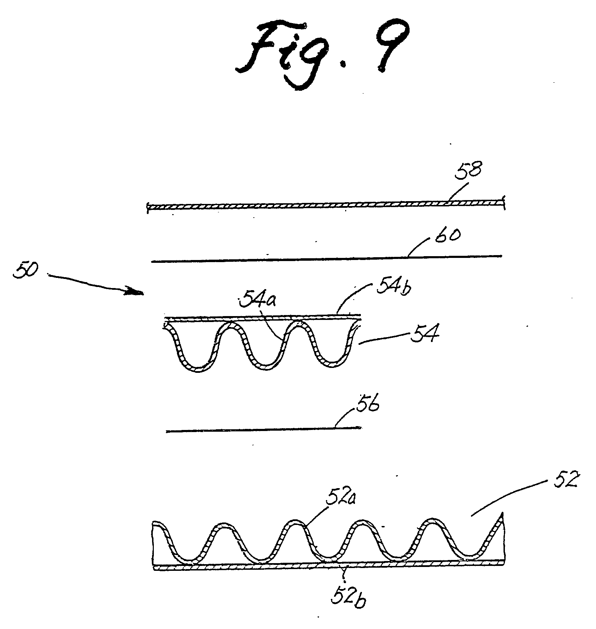

In view of the pracrical process, it may be possible to construct the paperboard which is partically reinforced by double layer corrugated construction by overlying anoter liner over a liner of the partially reinforcing single-wall corrugated paperboard. Process is shown in **Figs. 9** and **10**. As will be seen from **Fig. 9**, one single-wall corrugated paperboard **52** as a base segment is provided desired full area. The other single-wall corrugated paperboard **54** as reinforcing segment having smaller area than the paperboard **52** is put on the latter with opposing the corrugated medium **54a** to the corrugated medium **52a**. A thin thermoplastic resin film **56** disposed between the opposing corrugated mediums **52a** and **54a**. The thermoplastic resin film **56** is formed into a size corresponding to the size of the paperboard **54**. A linerboard **58** is provided over the linerboard **54b** of the paperboard **54**. A thermoplastic resin film **60** is disposed between the linerboards **54b** and **58** and between the linerboard **58** and corrugated medium **52a** at the portion being not covered by the paperboard **54**.

Preferably, the paperboards **52** and **54** and the linerboard **58** are assembled and pressed at a light pressure for forming a pre-assembly before fed into a hot press process. The construction set forth above and providing of the preassembly to the hot press process will be conveninently introduced for easy of preparation of the preassembly and of hot press process. The paperboard as final product obtained through the hot press process is shown in **Fig.10**.

As will be appreciated from the detailed discussion give hereabove, the corrugated paperboard according to the present invention can achieve substantial increase of strength without causing substantial increase of the thickness and weight of the board. Therefore, the invention fulfills all of the objects and advantages sought therefor.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims. For example, though the shown embodiment is specifically directed to double layer corrugate construction, the invention should not be limited to the double layer structure but can be applied for triplicate for further multi-layer constructions. Furthermore, though the discussion given hereabove examplifies specific automotive applications of the corrugated paperboard, the paperboard according to the invention is applicable not only for automotive use but also as constructional material for variety of constructions, such as building, house and so forth. Furthermore, the double layer corrugate construction tenchnologies can be applicable not only for producing material for lining but also for forming paper containers and other paperboard products.

## Claims

1. A corrugated board comprising:
first and second linerboard made of sheet materials and arranged in essentially parallel relationship to each other and in spaced apart relationship in a desired distance; and
first and second corrugated mediums made of sheet material and having a plurality of parallel corrugations, each having essentially identical corrugation constructions with essentially identical corrugation profiles, said first and second corrugated mediums being engaged to each other and at least partially bonded to each other by a thermoplastic resin, and said first corrugated medium being bonded to said first linerboard at essentially peak portion of said corrugations and said second corrugated medium being bonded to said second linerboard at essentially peak portion of said corrugations.

2. A corrugated board shaped in a desired configuration having at least a portion three-dimensionally curved, comprising:
first and second linerboard made of sheet material and arranged in essentially parallel relationship to each other and in spaced apart relationship in a desired distance; and
first and second corrugated mediums made of sheet material and having a plurality of parallel corrugations, each having essentially identical corrugation constructions with essentially identical corrugation profiles, said first and second corrugated mediums being engaged to each other and bonded to each other by a thermoplastic resin at first bonding points, and said first corrugated medium being bonded to said first linerboard at essentially peak portion of said corrugations at second bonding points and said second corrugated medium being bonded to said second linerboard at essentially peak portion of said corrugations third bonding points, said first, second and third bonding points being variable at orientations for maintaining shaped configuration.

3. A corrugated board comprising:
a first section which comprises
first and second linerboard made of sheet material and arranged in essentially parallel relationship to each other and in spaced apart relationship in a desired distance; and
a single corrugated medium made of sheet material and having a plurality of parallel corrugations, and said single corrugated medium being bonded to said first and second linerboards essentially at peak portions of said corrugations; and
a second section comprising
first and second linerboard common to said first section and being spaced apart at essentially the same distance to that of said first section; and
first and second corrugated mediums made of sheet material and having a plurality of parallel corrugations, each having essentially identical corrugation constructions with essentially identical corrugation profiles, said first and second corrugated mediums being engaged to each other and at least partially bonded to each other by a thermoplastic resin, and said first corrugated medium being bonded to said first linerboard at essentially peak portion of said corrugations and said second corrugated medium being bonded to said second linerboard at essentially peak portion of said corrugations.

4. A corrugated board shaped in a desired configuration having at least a portion three-dimensionally curved, comprising:
a first section which comprises
first and second linerboard made of sheet material and arranged in essentially parallel relationship to each other and in spaced apart relationship in a desired distance; and
a single corrugated medium made of sheet material and having a plurality of parallel corrugations, and said single corrugated medium being bonded to said first and second linerboards essentially at first bonding points which are essentially oriented at peak portions of said corrugations; and
a second section comprising
first and second linerboard common to said first section and being spaced apart at essentially the same distance to that of said first section; and
first and second corrugated mediums made of sheet material and having a plurality of parallel corrugations, each having essentially identical corrugation constructions with essentially identical corrugation profiles, said first and second corrugated mediums being engaged to each other and at least partially bonded to each other by a thermoplastic resin at second bonding points, and said first corrugated medium being bonded to said first linerboard at third bonding portion oriented essentially at peak portions of said corrugations and said second corrugated medium being bonded to said second linerboard at fourth bonding points oriented essentially at peak portions of said corrugations, said first, second, third and fourth bonding points being variable at orientations for maintaining shaped configuration.

5. A corrugated board shaped in a desired configuration comprising:
a first section which comprises
first and second linerboard made of sheet material and arranged in essentially parallel relationship to each other and in spaced apart relationship in a desired distance; and
a single corrugated medium made of sheet material and having a plurality of parallel corrugations, and said single corrugated medium being bonded to said first and second linerboards essentially at first bonding points which are essentially oriented at peak portions of said corrugations; and
a second section comprising
first and second linerboard common to said first section and being spaced apart at essentially the same distance to that of said first section; and
first and second corrugated mediums made of sheet material and having a plurality of parallel corrugations, each having essentially identical corrugation constructions with essentially identical corrugation profiles, said first and second corrugated mediums being engaged to each other and at least partially bonded to each other by a thermoplastic resin bonding medium at second bonding points, and said first corrugated medium being bonded to a third linerboard at third bonding portion oriented essentially at peak portions of said corrugations, which third linerboard having a surface opposing said first linerboad and bonded thereto, and said second corrugated medium being bonded to said second linerboard at fourth bonding points oriented essentially at peak portions of said corrugations, said first, second, third and fourth bonding points being variable at orientations for maintaining shaped configuration.

6. A method of manufacturing corrugated board, comprising the steps of:
preparing pre-assembly of a sheet material linerboard and a sheet material corrugated medium in a form of single-wall corrugated board;
arranging a pair of pre-assemblies in opposing corrugated mediums;
disposing a bonding medium therebetween, said bonding medium being made of a material which is in solid state under a normal temperature and molten at a predetermined temperature for bonding;
exerting pressure onto at least one of said pre-assembly in a direction toward the other pre-assembly under a temperature higher than or equal to said predetermined temperature for assembling said pair of pre-assemblies into a board by bonding said mating corrugated mediums; and
curing pressed board for solidification of said bonding medium.

7. A method as set forth in claim 6, wherein said bonding medium is a thermoplastic resin.

8. A method as set forth in claim 7, wherein said thermoplastic resin is selected among polyethylene, polypropylene, polyvinyl chloride, polyvinyl acetate, polystyrene, ethylene-propylene, copolymers and ethylenevinyl acetate copolymers.

9. A method as set forth in claim 8, wherein said bonding medium further contains a filler of talc.

10. A method as set forth in claim 7, wherein said thermoplastic resin is provided in a form of thin film.

11. A method as set forth in claim 6, wherein said pressure exerting step is performed by means of a hot press apparatus having a heated dies.

12. A method of manufacturing corrugated board, comprising the steps of:
preparing first pre-assembly of a sheet material linerboard and a sheet material corrugated medium in a form of single-wall corrugated board;
arranging a pair of firstr pre-assemblies in opposing corrugated mediums;
disposing a bonding medium therebetween, said bonding medium being made of a material which is in solid state under a normal temperature and molten at a predetermined temperature for bonding;
attaching said bonding medium to one of said first pre-assembly to form a second preassembly;
combining said first assembly and mating second assembly in a pre-combined form;
exerting pressure onto said pre-combined form of said first and second pre-assemblies through at least one of said pre-assemblies in a direction toward the other pre-assembly under a temperature higher than or equal to said predetermined temperature for assembling said pair of pre-assemblies into a board by bonding said mating corrugated mediums; and
curing pressed board for solidification of said bonding medium.

13. A vehicular liner material made from a corrugated board, comprising:
a decorative liner; and
a shaped board which comprises
first and second linerboard made of sheet material and arranged in essentially parallel relationship to each other and in spaced apart relationship in a desired distance, on said first linerboard said decorative liner is fixedly attached; and

first and second corrugated mediums made of sheet material and having a plurality of parallel corrugations, each having essentially identical corrugation constructions with essentially identical corrugation profiles, said first and second corrugated mediums being engaged to each other and at least partially bonded to each other by a thermoplastic resin, and said first corrugated medium being bonded to said first linerboard at essentially peak portion of said corrugations and said second corrugated medium being bonded to said second linerboard at essentially peak portion of said corrugations.

14. A vehicular liner material made from a corrugated board, comprising:

a decorative liner;

a shaped board in a desired configuration including at least a three-dimensionally curved portion, which shaped board comprises

first and second linerboard made of sheet material and arranged in essentially parallel relationship to each other and in spaced apart relationship in a desired distance; and

first and second corrugated mediums made of sheet material and having a plurality of parallel corrugations, each having essentially identical corrugation constructions with essentially identical corrugation profiles, said first and second corrugated mediums being engaged to each other and bonded to each other by a thermoplastic resin at first bonding points, and said first corrugated medium being bonded to said first linerboard at essentially peak portion of said corrugations at second bonding points and said second corrugated medium being bonded to said second linerboard at essentially peak portion of said corrugations third bonding points, said first, second and third bonding points being variable at orientations for maintaining shaped configuration.

15. A vehicular liner material made from a corrugated board, comprising:

a decorative liner;

a shaped board in a desired configuration including at least a three-dimensionally curved portion, which shaped board comprises

a first section which comprises

first and second linerboard made of sheet material and arranged in essentially parallel relationship to each other and in spaced apart relationship in a desired distance; and

a single corrugated medium made of sheet material and having a plurality of parallel corrugations, and said single corrugated medium being bonded to said first and second linerboards essentially at first bonding points which are essentially oriented at peak portions of said corrugations; and

a second section comprising

first and second linerboard common to said first section and being spaced apart at essentially the same distance to that of said first section; and

first and second corrugated mediums made of sheet material and having a plurality of parallel corrugations, each having essentially identical corrugation constructions with essentially identical corrugation profiles, said first and second corrugated mediums being engaged to each other and at least partially bonded to each other by a thermoplastic resin bonding medium at second bonding points, and said first corrugated medium being bonded to a third linerboard at third bonding portion oriented essentially at peak portions of said corrugations, which third linerboard having a surface opposing said first linerboad and bonded thereto, and said second corrugated medium being bonded to said second linerboard at fourth bonding points oriented essentially at peak portions of said corrugations, said first, second, third and fourth bonding points being variable at orientations for maintaining shaped configuration.

16. A vehicular liner material as set forth in claim 15, which is applied for a vehicular roof trim for a vehicle roof construction having a sunroof opening, and said second section of said paperboard is oriented around a opening formed in the board at a position corresponding to said sun roof opening.

17. A vehicular liner material as set forth in claim 15, which is applied for a vehicular roof trim for a vehicle roof construction having a T-bar roof opening, and said second section of said board is oriented around a opening formed in the board at a position corresponding to said T-bar roof opening.

EP 0 299 518 A2

# FIG.1

# FIG.2

# FIG.3

# FIG.4

# FIG.5

# Fig. 10

# FIG. 6(a)

# FIG. 6(b)

FIG. 7

FIG. 8

# Fig. 9